# EUROPÄISCHE PATENTSCHRIFT

(11) **EP 1 858 239 B1**
(45) Veröffentlichungstag und Bekanntmachung des Hinweises auf die Patenterteilung: **02.01.2019**
(21) Anmeldenummer: 07108162.4
(22) Anmeldetag: 14.05.2007
(51) Int. Cl.: H04M 1/64, H04M 1/725

(54) **Verfahren zum Verwalten von Abläufen auf einem mobilen Endgerät und entsprechendes Verwaltungssystem**
Method for managing of applications on a mobile terminal and corresponding management system
Procédé destiné à la gestion du déroulement sur un terminal mobile et système de gestion correspondent

(30) Priorität: 17.05.2006 DE 102006023214; 07.06.2006 DE 102006026491
(43) Veröffentlichungstag der Anmeldung: 21.11.2007
(73) Patentinhaber: Vodafone GmbH, 40549 Düsseldorf (DE)
(72) Erfinder: Degen, Dr., Helmut, 40470, Düsseldorf (DE); Lamberts, Harald, 40213, Düsseldorf (DE)
(74) Vertreter: Cullinane, Marietta Bettina

(56) Entgegenhaltungen:
- EP-A1- 1 569 426
- WO-A-03/056791
- WO-A-2004/093475
- WO-A-2004/110040
- US-A1- 2004 097 218
- US-A1- 2005 138 177

## Beschreibung

Die vorliegende Erfindung betrifft ein Verfahren zum Verwalten von Abläufen auf einem mobilen Endgerät eines Kommunikationsnetzes, insbesondere Mobilfunknetzes und ein Verwaltungssystem für ein mobiles Endgerät.

In mobilen Endgeräten, wie beispielsweise Mobiltelefonen, die in Kommunikationsnetzen genutzt werden, sind in der Regel eine Reihe von Anwendungen vorgesehen, die die Kommunikation beziehungsweise Interaktion mit anderen Kommunikationspartnern in dem Kommunikationsnetz ermöglichen sollen oder eine Kommunikation zwischen dem mobilen Endgerät und dem Nutzer des Endgerätes ermöglichen sollen. Neben Anwendungen zur reinen Sprachübermittlung sind in modernen mobilen Endgeräten auch Anwendungen zur Erstellung und Übertragung von Text- und/oder Bildnachrichten, beispielsweise SMS und MMS, sowie Kommunikationsverwaltungsanwendungen, wie Kalenderanwendungen und Adressbuchanwendungen vorgesehen. Mit der Zunahme der Funktionalitäten der mobilen Endgeräte nimmt auch deren Bedienungskomplexität zu.

Um dieses Problem zu adressieren ist beispielsweise in der US 2003/0092454 A1 ein System vorgeschlagen, bei dem einzelne Anwendungen zentral auf einem Steuerungsrechner verwaltet werden. Insbesondere kann die Kalenderanwendung auf diesem Rechner verwaltet werden. Die Erinnerungsfunktion erfolgt bei diesem System über den Versand einer SMS-Nachricht an den Nutzer der Kalenderanwendung. Der Nachteil dieses Systems besteht darin, dass die Verwaltung des Kalenders über den zentralen Rechner erfolgt und der Nutzer somit zur Aktualisierung in der Regel über eine Web-Page auf den zentralen Rechner zugreifen muss.

Weiterhin ist in der US 2005/0141677 A1 ein System für Kalender-Erinnerungen beschrieben. Durch dieses System soll es dem Nutzer eines Mobiltelefons ermöglicht werden auch nach einem Verschieben oder Ablehnen einer Erinnerung die Kalendereinträge und deren Status ermitteln zu können. Wird eine KalenderErinnerung aktiviert, so hat der Nutzer bei diesem System nur die Möglichkeiten die Erinnerung auf einen späteren Zeitpunkt zu verschieben oder keine weiteren Erinnerungen erzeugen zu lassen. Dieses System ist daher bezüglich der Nutzungsmöglichkeiten der auf einem Mobiltelefon vorgesehenen Anwendungen begrenzt.

Aus der US 2005/138177 A1 sind weiterhin eine Kommunikationsvorrichtung und ein Verfahren zum Betreiben dieser Vorrichtung bekannt. Hierbei wird ein Kommunikations-Manager verwendet, der mit einer Speichereinheit verbunden ist. In der Speichereinheit sind Daten bezüglich zumindest eines Kontakts hinterlegt. Ein Eintrag in der Speichereinheit kann eine Anwendungshistorie sein. Diese Anwendungshistorie umfasst eine oder mehrere Anwendungen, die zuvor von dem Nutzer bei der Kommunikation mit dem Kontakt verwendet wurden. Die Anwendungen, die in der Speichereinheit abgelegt sind, werden als sekundäre Anwendungen aufgerufen, wenn eine Kommunikationsverbindung zu einer anderen Kommunikationsvorrichtung vorliegt. Das Aufrufen der Anwendung erfolgt in Abhängigkeit des Kontaktes mit dem die Kommunikationsverbindung besteht.

Ein Nachteil dieser Vorrichtung und dieses Verfahrens liegt darin, dass die Vorteile des Aufrufens einer Anwendung ausschließlich bei bereits bestehenden Kommunikationsverbindungen genutzt werden können. Die Kommunikation muss zudem von einem Kontakt stammen, mit dem der Nutzer bereits kommuniziert hat. Beim Telefonat mit einer unbekannten Person oder einer Person, die Ihre Kennung blockiert hat, können die Vorteile nicht genutzt werden. Auch bei Ereignissen innerhalb der Kommunikationsvorrichtung selber können die Vorteile nicht genutzt werden.

Aufgabe der vorliegenden Erfindung ist es eine Möglichkeit zu schaffen, mittels derer der Nutzer eines mobilen Endgerätes die auf dem mobilen Endgerät vorgesehenen Anwendungen gezielt einsetzen und die durch die Anwendungen initiierten Abläufe auf dem mobilen Endgerät auf einfache Weise verwalten kann.

Gemäß einem ersten Aspekt wird die Aufgabe erfindungsgemäß gelöst, durch ein Verfahren zum Verwalten von Abläufen auf einem mobilen Endgerät eines Kommunikationsnetzes, insbesondere eines Mobilfunknetzes. Das Verfahren zeichnet sich dadurch aus, dass bei Erkennen eines Ereignissignals in dem mobilen Endgerät, Angaben aus einer hinterlegten Liste ausgelesen werden und in Abhängigkeit der ausgelesenen Angaben mindestens eine Anwendung gestartet wird, wobei zumindest eine der Listen eine Ereignis-Typenliste darstellt und auf dem mobilen Endgerät ein Ereignis-Typ aufgrund des Ereignissignals ausgewählt wird.

Ein Ereignissignal kann, wie später genauer erläutert wird durch eine Anwendung oder eine Funktion einer Anwendung erzeugt werden. Das dem Ereignissignal zugrunde liegende Ereignis stellt somit die Ausführung einer Anwendung oder einer Funktion einer Anwendung dar. Anwendungen sind insbesondere Benutzerprogramme. Hierbei kann das Ereignissignal durch Eingaben seitens des Benutzers in der Anwendung erzeugt werden.

Es liegt aber auch im Rahmen der Erfindung, dass Anwendungen Programme sind, die keine Interaktion mit dem Benutzer ermöglichen, insbesondere Programme, die netzwerkseitig ausgeführt werden beziehungsweise netzwerkseitige Kommunikationsabläufe. Das Erkennen eines solchen Ereignissignals erfolgt beim Auftreten des Ereignissignals beziehungsweise beim Erhalt des Ereignissignals an dem mobilen Endgerät.

Indem ein Ereignissignal nicht zwangsläufig zur Ausführung einer Funktion führt, wie dies beim Stand der Technik bekannt ist, sondern Angaben berücksichtigt werden, die in einer Liste hinterlegt sind, wird es möglich, nicht nur Funktionen innerhalb einer Anwendung, sondern auch Anwendungen zu starten. Somit wird eine Verknüpfung zwischen Anwendungen beziehungsweise das Aufrufen einer Anwendung oder Funktion einer Anwendung aus einer gegebenenfalls anderen Anwendung möglich. Für den Benutzer des mobilen Endgerätes wird somit die Handhabung des Endgerätes vereinfacht und dennoch eine große Flexibilität in der Handhabung des mobilen Endgerätes gewährleistet.

Eine Funktion kann im Sinne dieser Erfindung eine Aktion innerhalb einer Anwendung oder eine eigenständige Anwendung sein. Somit kann auch das erfindungsgemäß vorgesehene Starten einer Anwendung gegebenenfalls das Starten einer Funktion innerhalb einer Anwendung beziehungsweise einer Funktion, die eine Anwendung darstellt, sein.

Angaben können im Sinne dieser Erfindung das Ereignis betreffen. Hierbei können sich die Angaben auf die Ausführung einer Anwendung oder Funktion, die Art der Anwendung oder Funktion und/oder Inhalte der Anwendung oder Funktion beziehen. Weiterhin können Angaben einen Kommunikationspartner, mit dem der Benutzer des mobilen Endgerätes in Kontakt treten will, betreffen. Hierbei können Angaben, wie Kontaktdetails, beispielsweise Telefonnummer oder Name, aber auch allgemeine Angaben, wie das Geschlecht der Kontaktperson oder die Art des Kontaktes, beispielsweise beruflich oder privat, berücksichtigt werden. Schließlich können sich die Angaben auch auf die Anwendung, durch die das Ereignissignal erzeugt wurde, oder die Anwendung, die aufgrund des Ereignissignals gestartet wurde, beziehen.

Die Liste, aus der diese Angaben ausgelesen werden können, kann in dem mobilen Endgerät oder in einer netzwerkseitigen Einheit, wie beispielsweise einem Server, hinterlegt sein oder dort erzeugt werden. Die Liste kann als Tabelle hinterlegt sein oder erzeugt werden. Als Liste wird aber auch die Verknüpfung von Angaben bezeichnet, die gegebenenfalls an unterschiedlichen Orten des mobilen Endgerätes oder in dem Kommunikationsnetz gespeichert sind.

Vorzugsweise wird das Ereignissignal durch eine Anwendung beziehungsweise eine Funktion innerhalb einer Anwendung ausgelöst, die von der Anwendung, die durch die ausgelesenen Angaben gestartet wird, verschieden ist. Anders als bei Verfahren des Standes der Technik ist somit eine Verbindung von unterschiedlichen Anwendungen beziehungsweise Funktionen auch innerhalb unterschiedlicher Anwendungen möglich, selbst wenn diese Anwendungen originär keine Schnittstelle für die jeweils andere Anwendung aufweisen.

Insbesondere kann die ausgelöste Anwendung eine unterschiedliche Kommunikationsart zu der Kommunikationsart betreffen, die in der Anwendung verwendet wird, durch die das Ereignissignal ausgelöst wird. Als Kommunikationsart wird in diesem Zusammenhang das Format bezeichnet, derer sich die Anwendung zur Kommunikation bedient. Zusätzlich zur Kommunikationsart können sich die Anwendung, durch die das Ereignissignal erzeugt wird, und die Anwendung, die durch das Ereignissignal gestartet wird, auch bezüglich des Kommunikationsweges unterscheiden. So kann eine Anwendung in dem mobilen Endgerät ablaufen und mit dem Benutzer über Ausgabemittel, wie eine Anzeige oder einen Lautsprecher kommunizieren, beziehungsweise dem Benutzer Informationen zukommen lassen. Dies ist beispielsweise bei einer Kalenderanwendung der Fall. Es ist aber auch möglich, dass die Anwendung für eine Kommunikation mit einem weiteren mobilen Endgerät oder einem anderem Gerät, das einem Kommunikationspartner zugerechnet wird, dient. Dies ist beispielsweise bei Anwendungen zur Nachrichtenversendung, beispielsweise durch eine SMS oder eine MMS, der Fall.

Das Ereignissignal kann in dem mobilen Endgerät erzeugt werden. Insbesondere kann das Ereignissignal durch eine Anwendung auf dem mobilen Endgerät erzeugt werden.

Es ist allerdings auch möglich, dass das Ereignissignal aufgrund eines netzwerkseitigen Ereignisses erzeugt wird. Solche netzwerkseitigen Ereignisse, die zu einem Ereignissignal führen, sind beispielsweise Anrufsignale, insbesondere Signale über einen eingehenden Anruf, einen unbeantworteten Anruf oder einen beendeten Anruf, der gegebenenfalls durch eine Netzwerkstörung unterbrochen wurde. Weitere mögliche netzwerkseitige Ereignisse können beispielsweise eingehende Nachrichten sein. Diese Nachrichten können Text-, Bild-, Video- oder andere Nachrichten darstellen.

Ereignissignale, die auf dem beziehungsweise in dem mobilen Endgerät erzeugt werden, können beispielsweise Signale einer Kalenderanwendung, insbesondere eine Erinnerung, sein. Auch bezüglich des mobilen Endgerätes beziehungsweise dessen Zustandes können Ereignissignale erzeugt werden. So kann beispielsweise ein Ereignissignal die Information über einen Batteriezustand umfassen. Weitere Ereignissignale können Umgebungsinformationen sein. Somit kann beispielsweise als Ereignissignal das Erkennen der Umgebung widerspiegeln, in dem sich das mobile Endgerät beziehungsweise dessen Benutzer aufhält. Ein Ereignissignal in diesem Zusammenhang kann daher beispielsweise den Aufenthalt in einem Kraftfahrzeug, einem Flugzeug oder einer Besprechung anzeigen.

Die Liste der Angaben, aus der beim Erkennen eines Ereignissignals Angaben ausgelesen werden, kann Anwendungen, Informationen betreffend ein Ereignis und/ oder Informationen betreffend eine Person umfassen. Diese Liste kann als eine Einheit hinterlegt sein. Es ist aber auch möglich, dass die Angaben aus mehreren Listen gleichzeitig oder sukzessive ausgelesen werden. Durch das Auslesen von Angaben aus der Liste kann eine gezielte Verknüpfung einer Anwendung mit einer weiteren Anwendung erfolgen. Weiterhin wird es durch das Auslesen auch möglich, Anwendungen zu personalisieren und gegebenenfalls den entsprechenden Bedingungen anzupassen.

Erfindungsgemäß stellt zumindest eine der Listen der Angaben eine Ereignistypenliste dar. In der Ereignistypenliste ist jedem Ereignissignal ein Ereingistyp zugeordnet. Diese Ereignistypenliste kann automatisch oder manuell aktualisiert werden. Auf dem mobilen Endgerät wird ein Ereignistyp aufgrund des Ereignissignals ausgewählt. Durch Unterteilung von Ereignissen anhand von Ereignistypen kann eine gezielte Zuordnung eines erkannten Ereignissignals erfolgen. Die Unterteilung in Ereignistypen kann bei den oben bereits genannten Beispielen exemplarisch eine Aufteilung in Anruf, Nachricht, Kalendereintrag, Batteriestatus und/oder Umgebungsinformationen sein. Der Ereignistyp stellt somit nicht das spezielle Ereignis dar. Vielmehr wird die Art des Ereignisses zunächst erkant und anhand dieses Typs beziehungsweise dieser Art eine entsprechende Anwendung ausgewählt. Weitere Informationen oder Daten betreffend das spezielle Ereignis können später im Verfahren berücksichtigt werden. Die Zuordnung von Ereignistypen zu Ereignissignalen bringt den Vorteil mit sich, dass aufgrund der Natur des Ereignissignals in der Regel eine geeignete Anwendung ausgewählt und gegebenenfalls auch eine gewünschte Folgeaktion des Benutzers berücksichtigt werden kann und damit eine geeignete Anwendung gestartet wird.

Gemäß einer Ausführungsform wird eine Liste von Anwendungsoptionen erzeugt, in der jedem Ereignistyp zumindest eine Anwendung zugeordnet ist. Die Optionsliste kann in dem mobilen Endgerät erzeugt werden, sobald ein Ereignistyp erkannt wurde. Es liegt aber auch im Rahmen der Erfindung, dass die Optionsliste in dem mobilen Endgerät hinterlegt ist. Insbesondere im letztgenannten Fall kann die Optionsliste aktualisiert werden. In der Anwendungsoptionsliste ist vorzugsweise jedem Ereignistyp mindestens eine Anwendung zugeordnet.

Durch diese erzeugte oder hinterlegte Liste kann einem Ereignissignal die geeignete Anwendung beziehungsweise die geeigneten Anwendungen zugeordnet werden. In der Anwendungsoptionsliste sind Anwendungen zusammengefasst, die als Reaktion auf das Ereignissignal geeignet sind. So kann beispielsweise bei einem verpassten Anruf die Anwendungsoptionsliste die Optionen der Verbindungsherstellung, der Nachrichtenversendung und/oder einer Kalenderanwendung umfassen. Hierdurch kann eine Kommunikationsverbindung zu dem Anrufer hergestellt, einer Nachricht beispielsweise SMS an den Kommunikationspartner versandt werden und/oder ein Eintrag in einem Kalender erstellt werden.

Gemäß einer bevorzugten Ausführungsform ist der Auswahl einer der Anwendungsoptionen ein Optionsprüfungsschritt nachgeschaltet. Es liegt aber auch im Rahmen der Erfindung, dass der Optionsprüfungsschritt vor der Auswahl einer der Optionen durchgeführt wird und gegebenenfalls nur die Optionen, die die Optionsprüfung bestehen, in die Anwendungsoptionsliste aufgenommen werden.

In dem Optionsprüfungsschritt kann die Ausführbarkeit der ausgewählten Optionen mit den vorhandenen Daten und Informationen überprüft werden. Somit kann sichergestellt werden, dass vor dem Starten einer Anwendung, die notwendigen Informationen und Daten vorliegen beziehungsweise nur eine Anwendung in die Anwendungsoptionsliste aufgenommen wird, die bei den vorliegenden Informationen beziehungsweise Daten ausführbar ist. Die dabei berücksichtigten Daten und Informationen können die Verfügbarkeit der Anwendung auf dem mobilen Endgerät, die Verfügbarkeit der zur Ausführung einer Option notwendigen Detailangaben, wie beispielsweise Kontaktdetails des Kommunikationspartners, und dergleichen sein.

Die Anwendungen können erfindungsgemäß Kommunikationsanwendungen, insbesondere Sprach-, Text- und/oder Bilderanwendungen sein. Jede dieser Anwendungen beziehungsweise eine darin enthaltene Funktion kann sowohl der Ursprung für ein Ereignissignal sein, als auch die Anwendung beziehungsweise Funktion sein, die aufgrund des Ereignissignals gestartet wird. Ein Beispiel für solche Kommunikationsanwendungen sind Anwendungen zur Verbindungsherstellung und Durchführen eines Telefonanrufes. Diese Anwendungen können beispielsweise zur Durchführung eines Sprachanrufes, eines Bildanrufes (Video Call), eines Gruppenanrufes beziehungsweise einer Konferenzschaltung dienen. Für die Ausführung dieser Anwendungen sind stets die Kontaktdaten des/der Kommunikationspartner, insbesondere deren Telefonnummer erforderlich. Anwendungen, die Textnachrichten betreffen sind beispielsweise Email, IM (Instant Messaging) und SMS (short message service), weitere Anwendungen, die auch Bildnachrichten umfassen können sind beispielsweise MMS (multimedia messaging service).

Weiterhin können Anwendungen im Rahmen der vorliegenden Erfindung Kommunikationsverwaltungsanwendungen sein. Ein Beispiel für eine solche Kommunikationsverwaltungsanwendung ist eine Kalenderanwendung. Indem eine solche Kommunikationsverwaltungsanwendung gegebenenfalls mit den zuvor genannten Sprach-, Text- und oder Bildanwendungen verknüpft werden kann, wird die Flexibilität der Handhabung des Endgerätes gesteigert. Da das Starten einer Anwendung bei der vorliegenden Erfindung durch ein Ereignissignal initiiert wird, ist die Verknüpfung dieser unterschiedlichen Anwendungsarten für den Benutzer einfach durchzuführen. Insbesondere ist es nicht erforderlich, dass der Benutzer eine Anwendung manuell auswählt und startet. Weitere Beispiele für Kommunikationsverwaltungsanwendungen sind eine Telefonbuchanwendung und eine Anwendung zur Verwaltung von Profilen bezüglich der Einstellungen des mobilen Endgerätes. Bei letzterer Anwendung können beispielsweise unterschiedliche Umstände hinterlegt sein, in denen anhand des Profils das mobile Endgerät in einen bestimmten Zustand beziehungsweise Modus versetzt wird. Solche Umstände sind beispielsweise der Aufenthalt des Benutzers des mobilen Endgerätes in einer Besprechung, in einem Fahrzeug, in einem Flugzeug. Auch manuell eingestellte Zustände beziehungsweise Modi können durch die Profilverwaltung abgedeckt sein. So kann beispielsweise ein Profil hinterlegt sein, in dem das mobile Endgerät keine Audio-Signale ausgibt. Dieser Zustand wird auch als Silent-Zustand bezeichnet.

Die aufgrund des Ereignissignals ausgelesenen Angaben können weiterhin, zumindest einen Teil des Inhalts einer Anwendungsnachricht und/oder Kontaktinformationen betreffend einen Kommunikationspartner enthalten. Durch das Auslesen solcher Informationen aufgrund des Erkennens eines Ereignissignals, kann eine spezielle Anwendung mit den notwendigen Daten und Informationen versorgt werden. Darüber hinaus können diese ausgelesenen Informationen die Anwendung für den Benutzer erleichtern, indem gegebenenfalls bereits teilweise eine erforderliche Eingabe zur Ausführung der Anwendung durch die ausgelesenen Angaben erzeugt wird. Beispielsweise kann die Telefonnummer des gewünschten Kommunikationspartners und/oder ein Teil oder die gesamte Textnachricht beziehungsweise Bildnachricht, die versandt werden soll, durch die ausgelesenen Angaben erzeugt werden.

Vorzugsweise sind die Angaben, die bei Erkennen eines Ereignissignals ausgelesen werden, in der Liste der Angaben kategorisiert. Mögliche Kategorien sind hierbei beispielsweise Ereignisse, Anwendungen und/oder Kommunikationspartner beziehungsweise Detailinformationen zu dem Kommunikationspartner. Die einzelnen Kategorien können auch in separaten Listen aufgeführt sein. Durch die Kategorisierung in der Liste wird es möglich, Angaben geeignet miteinander in Verbindung zu bringen und gegebenenfalls eine Angabe in einer Anwendung zu verwenden.

Außer den oben beschriebenen Profilen, die für Zustände des mobilen Endgerätes hinterlegt sein können, ist es auch möglich, Angaben, insbesondere Angaben über Kommunikationspartner in Profilen abzulegen. Erfindungsgemäß ist es daher möglich, dass in der Liste für einzelne Kommunikationspartner, individuelle Profile hinterlegt sind. Durch das Vorsehen eines solchen Profils kann beim Erkennen eines Ereignissignals das von dem gewünschten Kommunikationspartner bevorzugte Kommunikationsmittel verwendet werden. Weiterhin ist es möglich, dass der Benutzer des mobilen Endgerätes, von dem aus die Anwendung gestartet wird, in dem Profil Inhalte hinterlegt, die gegebenenfalls in Abhängigkeit des Ereignissignals an den entsprechenden Kommunikationspartner übermittelt werden soll. In den Profilen können Felder vorgesehen sein, die zur Auswahl der Inhalte dient. So kann beispielsweise ein Feld anzeigen, dass es sich bei dem Kommunikationspartner um einen privaten oder einen beruflichen Kontakt handelt. Durch diese Feldangabe kann der geeignete Inhalt gewählt werden. Beispielsweise kann bei einer Erinnerungsfunktion einer Kalenderanwendung, die auf einen Geburtstag hinweist, an einen privaten Kontakt eine persönliche Nachricht versandt werden, wohingegen bei einem beruflichen Kontakt die Nachricht förmlicher formuliert sein kann.

Die Anwendung, die durch das Ereignissignal gestartet wird, wird vorzugsweise automatisch startet. Diese bedeutet, dass eine Aktion des Benutzers nicht notwendig ist. Dieses automatisierte Starten einer Anwendung ist bei dem erfindungsgemäßen Verfahren möglich, da die Auswahl der geeigneten Anwendung und die gegebenenfalls für die Anwendung benötigten Angaben aus den entsprechenden Listen ausgelesen werden können.

Alternativ oder zusätzlich ist es ebenfalls möglich, dass vor dem Starten der Anwendung eine Auswahlliste, insbesondere eine Anwendungsoptionsliste, angezeigt beziehungsweise ausgegeben wird. Bei dieser Ausführungsform wird es dem Benutzer ermöglicht, ein gegebenenfalls automatisiertes Starten einer vorgegebenen Anwendung zu unterbinden. Statt einer voreingestellten Anwendung, die automatisch gestartet wird, kann in diesem Fall eine andere Anwendung ausgewählt werden. Hierdurch wird die Flexibilität weiter gesteigert. Ein Ändern eines in dem mobilen Endgerät hinterlegten Profils ist hierzu nicht erforderlich. Der Benutzer kann somit flexibel auf unterschiedliche derzeitige Bedingungen beziehungsweise Zustände reagieren.

Bei der Ausführungsform, bei der vor Start der Anwendung eine Auswahlliste angezeigt wird, wird vorzugsweise beim Ausbleiben einer Auswahl durch einen Benutzer des mobilen Endgerätes, nach einer vorgegebenen Zeit eine voreingestellte Anwendung gestartet. Diese Ausführungsform erleichtert die Benutzung des mobilen Endgerätes weiter. Dem Benutzer ist es bei dieser Ausführungsform freigestellt, ob er die Auswahl, die voreingestellt ist, akzeptieren oder eine alternative Auswahl treffen will.

Als weiterer Überprüfungsmechanismus kann bei dem erfindungsgemäßen Verfahren vor Beendigung einer Aktion, die durch die Anwendung initiiert wird, ein Bestätigungsschritt durchgeführt werden. Durch diesen Betätigungsschritt wird es dem Benutzer zu einem späteren Zeitpunkt in dem Verfahren erneut ermöglicht, vorgegebene Verfahrensschritte gegebenenfalls zu unterbinden. Vorzugsweise wird beim Ausbleiben einer Bestätigung durch einen Benutzer des mobilen Endgerätes die Aktion automatisch gemäß den ausgelesenen Angaben beendet. Somit ist ein Aktivwerden des Benutzers nicht erforderlich. Ist die Aktion beispielsweise das Versenden einer Nachricht, kann der Benutzer in dem Bestätigungsschritt aufgefordert werden zu bestätigen, dass die Nachricht versandt werden soll. Es ist auch möglich, dass eine weitere Bestätigung hinsichtlich des Inhaltes und/oder des Adressaten erfolgt.

Gemäß einer weiteren Ausführungsform werden nach dem Erkennen des Ereignissignals, Angaben anhand der für dieses Ereignissignal geeigneten Anwendungen ausgelesen. Hierbei wird zunächst die geeignete Anwendung, die gegebenenfalls in einer Anwendungsoptionsliste aufgeführt ist, ermittelt und die Angaben, die für diese Anwendung notwendig sind, werden ausgelesen.

Gemäß einem weiteren Aspekt trifft die Erfindung ein Verwaltungssystem für ein mobiles Endgerät eines Kommunikationsnetzes, insbesondere eines Mobilefunknetzes. Das Verwaltungssystem umfasst hierbei zumindest zwei Anwendungen in dem mobilen Endgerät und zeichnet sich dadurch aus, dass die Anwendungen so miteinander verknüpft sind, dass mindestens eine Anwendung aus mindestens einer anderen Anwendung heraus aufgerufen beziehungsweise gestartet werden kann und das mobile Endgerät mindestens eine Speichereinheit aufweist und die mindestens zwei Anwendungen auf die Speichereinheit zugreifen können und in der Speichereinheit eine nach Ereignistypen von Ereignissignalen kategorisierte Liste von Angaben betreffend Ereignisse hinterlegt ist.

Im Vergleich zu herkömmlichen Verwaltungssystemen für mobile Endgeräte, bei denen ausschließlich Funktionen innerhalb einer Anwendung von Ereignissignalen aus dieser Anwendung aufgerufen werden können, bietet das erfindungsgemäße Verwaltungssystem eine erhöhte Flexibilität und bessere Handhabbarkeit.

Vorzugsweise umfasst das mobile Endgerät mindestens eine Speichereinheit und die mindestens zwei Anwendungen können auf diese Speichereinheit zugreifen. Durch das Ablegen von Daten auf einer gemeinsamen Speichereinheit für beide Anwendungen können Informationen, die bezüglich einer Anwendung erzeugt werden, auch für die weitere Anwendung zur Verfügung stehen. Der Aufwand der Datenpflege wird hierdurch für den Benutzer verringert. Die Speichereinheit kann in das mobile Endgerät integriert sein. Es ist aber auch möglich, dass eine entfernbare Speichereinheit, beispielsweise eine SIM-Karte (subscriber identity module- Karte) verwendet wird.

Gemäß einer Ausführungsform ist in der Speichereinheit eine kategorisierte Liste von Angaben, betreffend Anwendungen, Kommunikationspartner und/oder Ereignisse, hinterlegt.

Auf dem mobilen Endgerät können mindestens zwei Anwendungen hinterlegt sein und mindestens eine Anwendung kann durch die mindestens eine andere Anwendung gestartet werden. Das mobile Endgerät kann beispielsweise ein Mobiltelefon oder ein PDA (personal digital assistant) darstellen. Die Anwendungen können beispielsweise auf der SIM-Karte oder einer anderen Speichereinheit des mobilen Endgerätes hinterlegt sein.

Merkmale und Vorteile, die bezüglich des erfindungsgemäßen Verfahrens beschrieben werden, gelten soweit anwendbar, ebenfalls für das Verwaltungssystem sowie jeweils umgekehrt.

Die vorliegende Erfindung wird im Folgenden erneut anhand der beiliegenden Figuren genauer erläutert. Es zeigen:
Figur 1: eine schematische Darstellung der Datenstruktur gemäß der vorliegenden Erfindung; und
Figur 2: ein schematisches Diagramm möglicher Verknüpfung von Anwendungen.

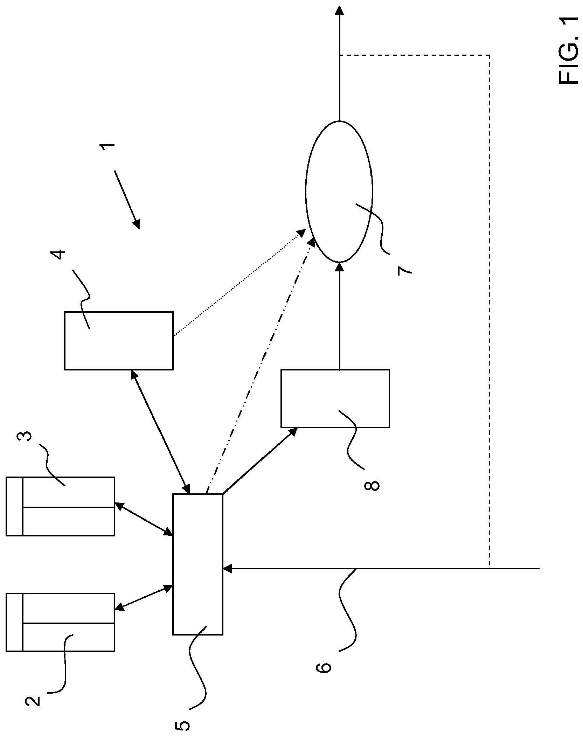

In dem in Figur 1 gezeigten Verwaltungssystem 1, ist eine Ereignisliste 2 und eine Optionsliste 3 enthalten. Weiterhin sind Angaben in einer Informationsliste 4 abgelegt. Die Listen können in einem mobilen Endgerät, das in dem Kommunikationsnetz verwendet wird, hinterlegt sein oder dort erzeugt werden. Es ist aber auch möglich, dass die Listen zumindest teilweise netzwerkseitig hinterlegt sind beziehungsweise erzeugt werden.

Die Ereignisliste 2 enthält Einträge über Ereignissignale und Ereignistypen. Jedem Ereignissignal ist hierbei ein Ereignistyp zugeordnet. In der Optionsliste 3 sind die Ereignistypen enthalten und jedem Ereignistyp zumindest eine Anwendung zugeordnet. In der Informationsliste 4 sind Anwendungen mit verfügbaren Daten beziehungsweise Informationen verknüpft, die auf dem mobilen Endgerät für die jeweilige Anwendung zur Verfügung stehen. Die Listen 2 bis 4 sind auf einer oder mehreren Speichereinheiten hinterlegt und können auch zusammengefasst sein.

In der dargestellten Ausführungsform ist weiterhin ein so genannter Ereignismanager 5 vorgesehen, der mit den Listen 2 bis 4 gemeinsam hinterlegt sein kann oder eine separate Einheit darstellt. Der Ereignismanager 5 kann als Programm ausgestaltet sein. Der Ereignismanager 5 kann auf die Listen 2 bis 4 beziehungsweise auf die Listeneinträge zugreifen und diese auslesen.

Mit der Bezugsziffer 6 ist ein Ereignissignal angedeutet. Dieses stammt von einer Anwendung (nicht gezeigt). Wie später erläutert wird, kann das Ereignissignal 6 aber auch von einer Anwendung 7, die später beschrieben wird stammen. Dies ist in der Figur 1 durch die gestrichelte Linie gezeigt.

Beim Erkennen eines Ereignissignals 6 wird der Ereignismanager 5 auf die Ereignistypenliste 2 zugreifen. Anhand des Ereignissignals 6 wird der diesem Ereignissignal zugeordnete Ereignistyp ausgelesen. Mit der Angabe über den Ereignistyp kann der Ereignismanager 5 aus der Optionsliste 3 die Anwendung beziehungsweise die Anwendungen auslesen, die dem Ereignistyp zugeordnet sind.

Im Anschluss daran können diese Anwendungen in einer Auswahlliste 8 angezeigt werden. Diese Anzeige kann bei einem Mobiltelefon beispielsweise auf dem Display erfolgen. Vorzugsweise wird eine Anwendung der Auswahlliste, beispielsweise die erste Anwendung als Standardanwendung markiert. Wählt der Benutzer keine der Anwendungen der Auswahlliste 8 manuell aus, so wird automatisch die Standardanwendung gestartet. Wählt der Benutzer hingegen eine andere Anwendung aus der Liste aus, so kann diese andere Anwendung gestartet werden.

Beim Ausführen der Anwendung 7, kann auf Daten und Informationen, die in der Informationsliste 4 abgelegt sind, zugegriffen werden.

Durch das Ausführen der so gestarteten Anwendung 7 kann gegebenenfalls ein Ereignissignal erzeugt werden, das erneut von dem Ereignismanager 5 erkannt wird.

Gemäß einer alternativen Ausführungsform des erfindungsgemäßen Verfahrens kann, nachdem das Ereignissignal 6 erkannt und anhand des Ereignistyps eine oder mehrere Anwendungen ausgewählt wurden, auf die Informationsliste 4 zugegriffen werden. In dieser Liste sind die zu den einzelnen Anwendungen zur Verfügung stehenden Daten und Informationen abgelegt. Es ist allerdings auch möglich, dass die Daten und Informationen nicht in der Liste abgelegt, sondern in der Liste nur auf diese verwiesen wird oder anderweitig eine Verbindung zwischen der Anwendung und den Daten und Informationen bereitgestellt wird.

Anhand der Daten und Informationen aus der Informationsliste 4 können die Anwendungen ausgewählt werden, die mit den zur Verfügung stehenden Daten und Informationen ausgeführt werden können. Diese Anwendungen können in einer Auswahlliste 8 zusammengefasst werden. Diese Liste 8 kann dem Benutzer angezeigt werden. Wählt der Benutzer aus der Liste eine Anwendung aus, so kann diese gestartet werden und mit den zur Verfügung stehenden Daten und Informationen ausgeführt werden. Auch bei dieser Ausführungsform ist es möglich, dass in der Auswahlliste 8 eine voreingestellte Standardanwendung angegeben ist. Erfolgt keine Auswahl durch den Benutzer, so kann diese Standardanwendung ausgeführt werden.

In einer weiteren Ausführungsform wird keine Auswahlliste 8 erstellt. In diesem Fall kann durch Voreinstellung eine Anwendung 7 gestartet werden.

Es versteht sich, dass die Vorgänge in dem Verwaltungssystem auch durch andere Einheiten oder Programme, als den dargestellten Ereignismanager 5 ausgeführt werden können.

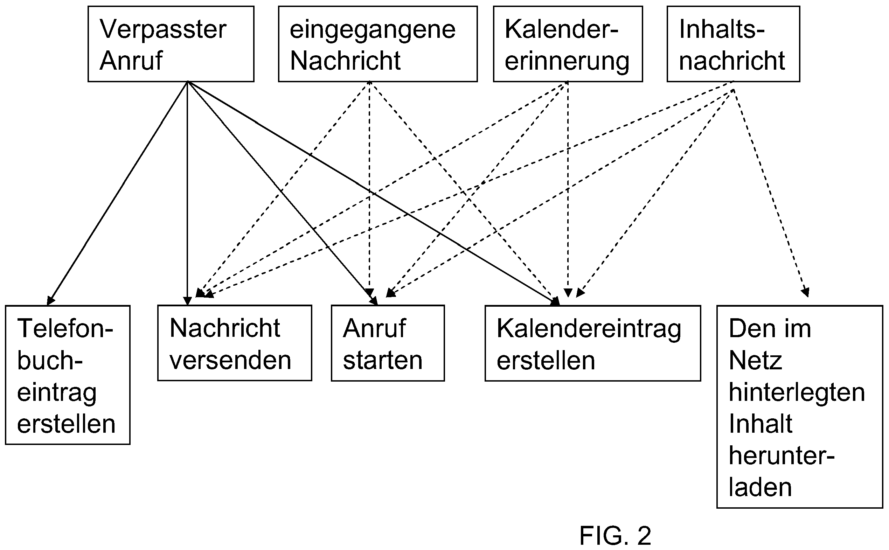

In der Figur 2 sind Ereignisse und die aufgrund der Ereignisse ausführbaren Anwendungen beziehungsweise Funktionen.

Wird ein Ereignissignal erkannt, das sich von einer Verbindungsanwendung stammt, beispielsweise, dass ein eingehender Anruf verpasst wurde, so stehen auf einem Mobiltelefon gemäß der Erfindung mehrere Anwendungen zur Verfügung, die ausgeführt werden können. Insbesondere kann eine Nachrichtenanwendung zum Versenden einer Nachricht gestartet werden. Weiterhin kann eine Verbindungsherstellungsanwendung gestartet werden, um einen Anruf mit dem Anrufer herzustellen. Auch das Starten einer Kalenderanwendung ist möglich. Hierbei kann ein Kalendereintrag erstellt werden.

Die gleichen Anwendungen bieten sich, an, wenn das Ereignissignal durch eine Nachrichtenanwendung erzeugt wurde. Beispielsweise kann eine dieser Anwendungen gestartet werden, wenn durch das Ereignissignal der Eingang einer Nachricht, beispielsweise Text- oder Bildnachricht, angezeigt wird. Ebenfalls bei einem Ereignissignal einer Kalenderanwendung bieten sich die genannten drei Anwendungen an.

Bei dem Empfang einer Inhaltsnachricht, mit der auf einen Inhalt, wie beispielsweise ein Programm, hingewiesen wird, bietet sich außer den genannten drei Anwendungen zusätzlich das Herunterladen des Inhalts, der im Netz hinterlegt ist, beispielsweise auf einem netzwerkseitigen Server, auf das mobile Endgerät an. Ein Beispiel für eine Inhaltsnachricht ist beispielsweise eine SMS-Nachricht, in der auf ein Spiel hingewiesen wird, das von einem Server beispielsweise über das Internet herunter geladen werden kann.

Bei einem Ereignissignal, das von einer Verbindungsanwendung stammt, beispielsweise ein Signal, das auf einen verpassten Anruf hindeutet, kann zusätzlich oder alternativ zu den oben genannten Anwendungen eine Telefonbuchanwendung gestartet werden und insbesondere ein Telefonbucheintrag erstellt werden, in dem die Telefonnummer des Anrufers festgehalten wird.

Wird eines der in Figur 2 gezeigten Ereignissignale erkannt, so können anhand der Ereignistypenliste 2 die entsprechenden Ereignistypen und mittels der Ereignistypen anhand der Optionsliste 3 die entsprechenden Anwendungen ausgewählt werden.

Im Folgenden wird der Ablauf des erfindungsgemäßen Verfahrens anhand des Beispiels detailliert beschrieben, bei dem das Ereignissignal eine Kalendererinnerung ist.

Ist auf dem mobilen Endgerät eine Kommunikationsverwaltungsanwendung, insbesondere eine Kalenderanwendung installiert, so kann durch diese Anwendung auf bevorstehende Ereignisse hingewiesen werden. In der Regel wird beispielsweise ein Geburtstag durch die Erinnerungsfunktion der Kalenderanwendung angezeigt. In diesem Fall wird das Ereignissignal durch die Erinnerungsfunktion beziehungsweise die Kalenderanwendung erzeugt. In dem mobilen Endgerät, beispielsweise in dem Ereignismanager 5 wird dieses Ereignissignal überprüft und dem dazugehörigen Ereignistyp zugeordnet. Bei dem vorliegendem Beispiel handelt es sich bei dem Ereignistyp um eine Kalenderfunktion. Dieser Kalenderfunktion können, wie in Figur 2 gezeigt, mehrere Anwendungen zugeordnet sein.

Es ist ebenfalls möglich, dass die Anwendungen, die einem Ereignistyp zugeordnet sind, beim Erkennen des Ereignistyps zusammengestellt und so die Anwendungsliste beziehungsweise Optionsliste 3 individuell, insbesondere unter Berücksichtigung der zur Verfügung stehenden Informationen und Daten, erzeugt wird.

In dem beschriebenen Fall kann dem Benutzer des mobilen Endgerätes die hinterlegte oder erzeugte Optionsliste angezeigt werden. Entscheidet der Benutzer, dass ein Anruf gestartet werden soll, so kann die Anwendung der Verbindungsherstellung auf Informationen zurückgreifen, die sich aus der Kalenderanwendung oder einer weiteren Anwendung auf dem mobilen Endgerät, wie beispielsweise eine Telefonbuchanwendung, ergeben. Beispielsweise kann der Name der anzurufenden Person aus der Kalenderanwendung ausgelesen werden und mittels dieser Angabe in einer Adressanwendung, die zugehörige Telefonnummer ermittelt werden. Alternativ kann dem Benutzer für die Option der Verbindungsherstellung eine Eingabemaske angezeigt werden, in die die Nummer des Kommunikationspartners eingegeben werden kann.

Wählt der Benutzer die Option des Versendes einer Nachricht, so kann auch in diesem Fall die zu kontaktierende Gegenstelle durch Auslesen von Informationen aus der Kalanderanwendung oder einer weiteren Anwendung erfolgen.

In dem beschriebenen Fall, bei dem das Ereignissignal aufgrund einer Erinnerungsfunktion erzeugt wurde, kann weiterhin die Information, dass es sich bei der Erinnerungsfunktion der Kalenderanwendung um die Erinnerung an ein spezielles Ereignis, beispielsweise einen Geburtstag, gehandelt hat, verwendet werden. Wird mit der Erinnerung auf einen Geburtstag hingewiesen, so kann diese Information über das Ereignis bei der Anwendung, die gestartet wird, berücksichtigt werden. Insbesondere kann beispielsweise der Text der zu versendenden Nachricht anhand dieser Information aus hinterlegten Textvorgaben ausgelesen werden.

Um die Bedienung des Verwaltungssystems für den Benutzer weiter zu erleichtern, kann in der oder für die Anwendung, durch die das Ereignissignal erzeugt wird, ein Profil hinterlegt sein, das die Wahl der geeigneten zu startenden Anwendung und gegebenenfalls Inhalte der mit der Anwendung zu erzeugenden Nachrichten festlegt. Bei dem beschriebenen Beispiel kann hinterlegt sein, dass es bei einem Geburtstag einer Dame zum Aufrufen der Nachrichtenanwendung kommt und in dieser Nachrichtenanwendung eine Nachricht verwendet wird, in der eine Darstellung von Blumen eingesetzt ist. Auch weitere Informationen, beispielsweise, dass es sich um einen persönlichen Kontakt handelt, können verwendet werden, um die geeignete Anwendung und/oder den geeigneten Inhalt bestimmen zu können.

Wird von dem Verwaltungssystem erkannt, dass die Erinnerungsfunktion sich nicht, wie bei dem eben beschriebenen Beispiel, um einen Geburtstag handelt, sondern um ein Geschäftstreffen handelt, so können die folgenden Informationen verwendet werden. Erneut kann dem Benutzer die Möglichkeit des Anrufes bei dem Organisator des Treffens oder das Schreiben einer Nachricht an den Organisator angeboten werden. In diesem Fall kann der Textinhalt der Nachricht beispielsweise die Ankündigung des verspäteten Eintreffens des Beteiligten an dem Geschäftstreffen sein.

Mit der vorliegenden Erfindung können somit hinterlegte Informationen - beispielsweise Kontaktinformationen - verwendet werden, um eine weitere Funktion, die sich gegebenenfalls auf eine andere Anwendung bezieht, zu starten.

Ereignisse umfassen in der Regel alle Arten der Kommunikation, die mit einem mobilen Endgerät möglich sind. Beispielsweise können dies Hinweise auf empfangene Nachrichten, Hinweise auf Anrufe, Erinnerungshinweise und Hinweise auf Inhalte sein. Die Funktionen, die durch die Anwendungen ausgeführt werden können, die aufgrund des Ereignissignals gestartet werden, umfassen unter anderem das Versenden einer Nachricht jeglicher Art, die Herstellung einer Telefonverbindung, das Erzeugen eines Kalendereintrages, das Ansehen von Inhalten, die Verwendung von Inhalten (beispielsweise Verwendung eines Spiels) und das Herunterladen von Inhalten.

Neben den bereits beschriebenen Beispielen ist es erfindungsgemäß möglich, auf eines oder mehrere der folgenden Ereignisse zu reagieren. Bei Anrufen können eingehende, verpasste sowie abgeschlossene Anrufe mit den entsprechenden Anwendungen verbunden werden. Auch bei Nachrichten können Anwendungen für eingehende, empfangene und gelesene Nachrichten angeboten beziehungsweise gestartet werden. Bei Kalenderanwendungen wird das Ereignissignal in der Regel durch eine Erinnerungsfunktion ausgelöst. Bezüglich Inhalten, die beispielsweise von einem Server herunter geladen werden, können die Ereignisse das Eintreffen der Inhalte beziehungsweise der vollständige Empfang des Inhalts sein. Auch der Zustand des mobilen Endgerätes kann ein Ereignissignal auslösen. So kann insbesondere der Batterieladezustand als Ereignissignal verwendet werden.

Schließlich ist es auch möglich, Umgebungsinformationen als Ereignissignal oder als Information zu verwenden, die bei der Auswahl und Ausführung einer Anwendung berücksichtigt werden. Beispielsweise kann der Aufenthalt in einem Auto durch das mobile Endgerät erkannt und so das zugehörige Ereignissignal erzeugt werden. Auch der Aufenthalt in einem Flugzeug kann beispielsweise durch einen Höhenmesser beziehungsweise eine entsprechende Anwendung auf dem mobilen Endgerät erkannt und das entsprechende Ereignissignal erzeugt werden. Der Aufenthalt in einer Besprechung kann ebenfalls ein Ereignissignal darstellen. Dieses Ereignissignal kann manuell durch Eingabe seitens des Benutzers erzeugt werden. Schließlich kann auch die Bewegung des Benutzers, wenn dieser beispielsweise spazieren geht, durch das mobile Endgerät unmittelbar erfasst oder durch den Benutzer eingegeben werden. Das daraufhin erzeugte Ereignissignal wird die entsprechenden Anwendungen initiieren.

Vorzugsweise werden die Umgebungsinformationen aber als Informationen verwendet, die bei der Auswahl einer Anwendung berücksichtigt werden. Befindet sich der Benutzer beispielsweise in einer Besprechung, so wird bei einem Ereignissignal, das auf einen verpassten Anruf hinweist, die Anwendung der Verbindungsherstellung zum Anrufen des Anrufers nicht als Standardanwendung in einer Auswahlliste gewählt. In diesem Fall kann beispielsweise vielmehr das Erstellen eines Kalendereintrages gewählt werden.

Anwendungen, die durch die Ereignissignale ausgelöst werden können, beziehungsweise Anwendungen, durch die ein Ereignissignal erzeugt wird, sind nicht auf bestimmte Kommunikationsarten beschränkt. Als Nachrichtenanwendungen kommen insbesondere MMS, SMS, E-Mail und Instant Messenger in Betracht. Bei diesen Anwendungen werden Informationen beziehungsweise Angaben zur Erzeugung und Versendung der Nachricht in der Regel aus Kontaktdaten entnommen, die auf dem mobilen Endgerät gespeichert sind. Bei Sprachanwendungen sind herkömmliche Anrufe, Videokonferenzen sowie so genannte Gruppenanrufe möglich. Auch bei diesen Sprachnachrichten werden in der Regel Kontaktinformationen aus einem Speicher des mobilen Endgerätes verwendet.

Bei Kalenderanwendungen wird in der Regel eine Erinnerungsfunktion beziehungsweise ein Kalendereintrag das Ereignissignal erzeugen.

Weitere Anwendungen, die insbesondere dazu dienen, notwendige Informationen für weitere Anwendungen zu liefern, sind insbesondere eine Telefonbuchanwendung sowie Profile, die der Benutzer entsprechend seinen Gewohnheiten einstellen kann. Profile in diesem Sinne können beispielsweise unterschiedliche Zustände umfassen. Insbesondere können ein Besprechungszustand, der Zustand beim Fahren mit einem Kraftfahrtzeug, der Zustand bei einem Flug, der Zustand während des Laufens und ein Ruhezustand angegeben sein.

Mit der vorliegenden Erfindung wird es somit möglich, eine Reihe von Anwendungen unter Berücksichtigung von hinterlegten Daten oder derzeitigen Umständen miteinander zu verknüpfen und so die Bedienung des mobilen Endgerätes für den Anwender zu erleichtern.

## Patentansprüche

1. Verfahren zum Verwalten von Abläufen auf einem mobilen Endgerät eines Kommunikationsnetzes, insbesondere Mobilfunknetzes, wobei bei Erkennen eines Ereignissignals (6) in dem mobilen Endgerät Angaben aus einer hinterlegten Liste (2, 3, 4, 8) ausgelesen werden und in Abhängigkeit der ausgelesenen Angaben mindestens eine Anwendung (7) gestartet wird, **dadurch gekennzeichnet, dass** zumindest eine der Listen (2, 3, 4, 8) eine Ereignis-Typenliste (2) darstellt, in der jeweils einem Ereignissignal ein Ereignistyp zugeordnet ist und der Ereignistyp die Art des Ereignisses angibt, anhand der Ereignis-Typenliste (2) der dem erkannten Ereignissignal entsprechende Ereignistyp ausgewählt wird und anhand einer Anwendungsoptionsliste, in der jedem Ereignistyp zumindest eine Anwendung zugeordnet ist, eine dem Ereignistyp entsprechende Anwendung ausgewählt und gestartet wird.

2. Verfahren nach Anspruch 1, **dadurch gekennzeichnet, dass** das Ereignissignal (6) durch eine Anwendung ausgelöst wird, die von der Anwendung (7), die durch die ausgelesenen Angaben gestartet wird, verschieden ist, insbesondere eine unterschiedliche Kommunikationsart betrifft.

3. Verfahren nach einem der Ansprüche 1 oder 2, **dadurch gekennzeichnet, dass** die Liste der Angaben (2, 3, 4, 8) Anwendungen, Informationen betreffend ein Ereignis und/oder Informationen betreffend eine Person umfasst.

4. Verfahren nach einem der Ansprüche 1 bis 3, **dadurch gekennzeichnet, dass** für jeden Ereignis-Typ die Liste von Anwendungsoptionen (3) hinterlegt ist und für den ausgewählten Ereignis-Typ eine Option ausgewählt wird und gegebenenfalls nach der Auswahl der Option eine Optionsprüfung durchgeführt wird, um die Ausführbarkeit der ausgewählten Option mit den vorhandenen Daten und Informationen zu überprüfen.

5. Verfahren nach einem der Ansprüche 1 bis 4, **dadurch gekennzeichnet, dass** die Anwendungen Kommunikationsanwendungen, insbesondere Sprach-, Text- und/oder Bildanwendungen sind und/oder Kommunikationsverwaltungsanwendungen, insbesondere Kalenderanwendungen oder Telefonbuchanwendungen sind.

6. Verfahren nach einem der Ansprüche 1 bis 5, **dadurch gekennzeichnet, dass** die ausgelesenen Angaben zumindest einen Teil des Inhalts einer Anwendungsnachricht und/oder Kontaktinformationen betreffend einen Kommunikationspartner darstellen.

7. Verfahren nach einem der Ansprüche 1 bis 6, **dadurch gekennzeichnet, dass** die Angaben in der Liste (2, 3, 4, 8) kategorisiert sind und gegebenenfalls die Kategorien die Ereignisse, Kommunikationspartner und/oder Anwendungen betreffen und gegebenenfalls für Kommunikationspartner individuelle Profile in der Liste (2, 3, 4, 8) hinterlegt sind.

8. Verfahren nach einem der Ansprüche 1 bis 7, **dadurch gekennzeichnet, dass** die Anwendung (7), die durch das Ereignissignal (6) gestartet wird, automatisch gestartet wird.

9. Verfahren nach einem der Ansprüche 1 bis 8, **dadurch gekennzeichnet, dass** vor dem Starten der Anwendung (7) eine Auswahlliste (8) angezeigt wird und gegebenenfalls beim Ausbleiben einer Auswahl durch einen Nutzer des mobilen Endgerätes, nach einer vorgegebenen Zeit eine voreingestellte Anwendung gestartet wird.

10. Verfahren nach einem der Ansprüche 1 bis 9, **dadurch gekennzeichnet, dass** vor Beendigung der Funktion, die durch die Anwendung initiiert wird, ein Bestätigungsschritt durchgeführt wird und gegebenenfalls bei Ausbleiben einer Bestätigung durch einen Benutzer des mobilen Endgerätes die Funktion automatisch gemäß den ausgelesenen Angaben beendet wird.

11. Verfahren nach einem der Ansprüche 1 bis 10, **dadurch gekennzeichnet, dass** das Ereignissignal (6) in dem mobilen Endgerät und/oder aufgrund eines netzwerkseitigen Ereignisses und/oder durch eine Anwendung auf dem mobilen Endgerät erzeugt wird.

12. Verfahren nach einem der Ansprüche 1 bis 11, **dadurch gekennzeichnet, dass** nach dem Erkennen des Ereignissignals (6) Angaben anhand der Kategorie der Anwendung ausgelesen werden, wobei zunächst der Inhalt des Anwendungsereignisses überprüft wird und die Angaben, die diesem Inhalt zugeordnet sind ausgelesen werden.

13. Verwaltungssystem für ein mobiles Endgerät eines Kommunikationsnetzes, insbesondere eines Mobilfunknetzes, wobei das Verwaltungssystem zumindest zwei Anwendungen in dem mobilen Endgerät umfasst, wobei die Anwendungen so miteinander verknüpft sind, dass mindestens eine Anwendung aus mindestens einer anderen Anwendung heraus aufgerufen werden kann und das mobile Endgerät mindestens eine Speichereinheit aufweist und die mindestens zwei Anwendungen auf die Speichereinheit zugreifen können, **dadurch gekennzeichnet, dass** und in der Speichereinheit eine nach Ereignistypen von Ereignissignalen kategorisierte Liste (2) von Angaben betreffend Ereignisse hinterlegt ist, der Ereignistyp die Art des Ereignisses angibt, und in einer Anwendungsoptionsliste (3) jedem Ereignistyp zumindest eine Anwendung zugeordnet ist.

14. Verwaltungssystem nach Anspruch 13, **dadurch gekennzeichnet, dass** das mobile Endgerät mindestens eine Speichereinheit aufweist und die mindestens zwei Anwendungen auf die Speichereinheit zugreifen können und gegebenenfalls in der Speichereinheit eine kategorisierte Liste (2, 3, 4, 8) von Angaben betreffend Anwendungen und/oder Kommunikationspartner hinterlegt ist.

## Claims

1. Method for managing processes on a mobile terminal of a communication network, in particular of a mobile radio network, wherein upon detection of an event signal (6) particulars are read out in the mobile terminal from a stored list (2, 3, 4, 8) and dependent on the read-out particulars at least one application (7) is started, **characterized in that** at least one of the lists (2, 3, 4, 8) is an event type list (2), wherein an event type is assigned to a respective event signal and the event type indicates the kind of event, by means of the event-type list (2) the event type which corresponds to the detected event signal is selected and by means of an application option list, wherein at least one application is assigned to each event type, an application which corresponds to the event-type is selected and started.

2. Method according to claim 1, **characterized in that** the event signal (6) is triggered by an application, which is different from the application (7), which is started by the read-out particulars, in particular which relates to a different communication kind.

3. Method according to anyone of claims 1 or 2, **characterized in that** the list of particulars (2, 3, 4, 8) comprises applications, information relating to an event and/or information relating to a person.

4. Method according to anyone of claims 1 to 3, **characterized in that** the list of application options (3) is stored for each event type and an option is selected for the selected event type and potentially after the selection of the option an option examination is carried out, in order to examine the executability of the selected option with the available data and information.

5. Method according to anyone of claims 1 to 4, **characterized in that** the applications are communication applications, in particular voice, text and/or image applications and/or communication management applications, in particular calendar applications or phone book applications.

6. Method according to anyone of claims 1 to 5, **characterized in that** the read-out particulars are at least a part of the content of an application message and/or contact information relating to a communication partner.

7. Method according to anyone of claims 1 to 6, **characterized in that** the indications in the list (2, 3, 4, 8) are categorized and potentially the categories relate to the events, communication partners and/or applications and potentially that for communication partners individual profiles are stored in the list (2, 3, 4, 8).

8. Method according to anyone of claims 1 to 7, **characterized in that** the application (7) which is started by the event signal (6) is started automatically.

9. Method according to anyone of claims 1 to 8, **characterized in that** before starting the application (7) a selection list (8) is displayed and potentially in absence of a selection by the user of the mobile terminal a preset application is started after a predetermined time.

10. Method according to anyone of claims 1 to 9, **characterized in that** before terminating the function which is initiated by the application a confirmation step is carried out and potentially in absence of a confirmation by the user of the mobile terminal, the function is automatically terminated according to the read-out particulars.

11. Method according to anyone of claims 1 to 10, **characterized in that** the event signal (6) is generated in the mobile terminal and/or due to a network-side event and/or by an application on the mobile terminal.

12. Method according to anyone of claims 1 to 11, **characterized in that** after the detection of the event signal (6) particulars are read out by means of the category of the application, wherein first the content of the application event is examined and the particulars which are assigned to the this content are read out.

13. Management system for a mobile terminal of a communication network, in particular of a mobile radio network, wherein the management system comprises at least two applications in the mobile terminal, wherein the applications are linked to each other such, that at least one application can be called from at least one different application and that the mobile terminal has at least one storage unit and the at least two applications can access the storage unit, **characterized in that** in the storage unit a list (2) of particulars concerning events is stored, which is categorized by event types of event signals, the event type indicates the kind of event and that in an application option list (3) at least one application is assigned to each event type.

14. Management system according to claim 13, **characterized in that** the mobile terminal has at least one storage unit and the at least two applications can access the storage unit and potentially **in that** in the storage unit a categorized list (2, 3, 4, 8) of particulars relating to applications and/or communication partners is stored.

## Revendications

1. Procédé destiné à la gestion de déroulements sur un terminal mobile d'un réseau de communication, en particulier un réseau de téléphonie mobile, dans lequel des données provenant d'une liste consignée (2, 3, 4, 8) sont lues lors de la détection d'un signal d'événement (6) dans le terminal mobile et au moins une application (7) est lancée en fonction des données lues, **caractérisé en ce qu'**au moins l'une des listes (2, 3, 4, 8) représente une liste de types d'événement (2), dans laquelle un type d'événement est respectivement attribué à un signal d'événement et le type d'événement indique la nature de l'événement, le type d'événement correspondant au signal d'événement détecté est sélectionné sur la base de la liste de types d'événement (2) et une application correspondant au type d'événement est sélectionnée et lancée sur la base d'une liste d'options d'application dans laquelle au moins une application est attribuée à chaque type d'événement.

2. Procédé selon la revendication 1, **caractérisé en ce que** le signal d'événement (6) est déclenché par une application qui est différente de l'application (7) lancée par les données lues, en particulier qui concerne un mode de communication différent.

3. Procédé selon l'une quelconque des revendications 1 ou 2, **caractérisé en ce que** la liste des données (2, 3, 4, 8) comprend des applications, des informations concernant un événement et/ou des informations concernant une personne.

4. Procédé selon l'une quelconque des revendications 1 à 3, **caractérisé en ce que** la liste d'options d'application (3) est consignée pour chaque type d'événement et une option est sélectionnée pour le type d'événement sélectionné et, le cas échéant, une vérification d'option est réalisée après la sélection de l'option afin de vérifier la possibilité d'exécution de l'option sélectionnée avec les données et informations présentes.

5. Procédé selon l'une quelconque des revendications 1 à 4, **caractérisé en ce que** les applications sont des applications de communication, en particulier des applications vocales, de texte et/ou d'image et/ou des applications de gestion de communication, en particulier des applications de calendrier ou des applications d'annuaire.

6. Procédé selon l'une quelconque des revendications 1 à 5, **caractérisé en ce que** les données lues représentent au moins une partie du contenu d'un message d'application et/ou des informations de contact concernant un partenaire de communication.

7. Procédé selon l'une quelconque des revendications 1 à 6, **caractérisé en ce que** les données sont catégorisées dans la liste (2, 3, 4, 8) et, le cas échéant, les catégories concernent les événements, les partenaires de communication et/ou les applications et, le cas échéant, des profils individuels sont consignés dans la liste (2, 3, 4, 8) pour les partenaires de communication.

8. Procédé selon l'une quelconque des revendications 1 à 7, **caractérisé en ce que** l'application (7) qui est lancée par le signal d'événement (6) est lancée automatiquement.

9. Procédé selon l'une quelconque des revendications 1 à 8, **caractérisé en ce qu'**une liste de sélection (8) est affichée avant le lancement de l'application (7) et, le cas échéant, une application préréglée est lancée après un temps prédéfini en cas d'absence de sélection par un utilisateur du terminal mobile.

10. Procédé selon l'une quelconque des revendications 1 à 9, **caractérisé en ce qu'**une étape de confirmation est réalisée avant l'achèvement de la fonction qui est initiée par l'application et, le cas échéant, la fonction est automatiquement achevée conformément aux données lues en cas d'absence de confirmation par un utilisateur du terminal mobile.

11. Procédé selon l'une quelconque des revendications 1 à 10, **caractérisé en ce que** le signal d'événement (6) est généré dans le terminal mobile et/ou en raison d'un événement du côté du réseau et/ou par une application sur le terminal mobile.

12. Procédé selon l'une quelconque des revendications 1 à 11, **caractérisé en ce que**, après la détection du signal d'événement (6), des données sont lues sur la base de la catégorie de l'application, dans lequel le contenu de l'événement d'application est d'abord vérifié et les données attribuées à ce contenu sont lues.

13. Système de gestion pour un terminal mobile d'un réseau de communication, en particulier un réseau de téléphonie mobile, dans lequel le système de gestion comprend au moins deux applications dans le terminal mobile, dans lequel les applications sont liées l'une à l'autre de sorte qu'au moins une application peut être appelée à partir d'au moins une autre application et le terminal mobile présente au moins une unité de mémoire et les au moins deux applications peuvent accéder à l'unité de mémoire, **caractérisé en ce que**, dans l'unité de mémoire, est consignée une liste (2) de données concernant des événements catégorisée par types d'événement de signaux d'événement, le type d'événement indique la nature de l'événement, et au moins une application est attribuée à chaque type d'événement dans une liste d'options d'application (3).

14. Système de gestion selon la revendication 13, **caractérisé en ce que** le terminal mobile présente au moins une unité de mémoire et les au moins deux applications peuvent accéder à l'unité de mémoire et, le cas échéant, une liste catégorisée (2, 3, 4, 8) de données concernant des applications et/ou des partenaires de communication est consignée dans l'unité de mémoire.
